# EUROPEAN PATENT SPECIFICATION

(11) **EP 0 942 011 B1**
(45) Date of publication and mention of the grant of the patent: **14.05.2003**
(21) Application number: 99104225.0
(22) Date of filing: 03.03.1999
(51) Int. Cl.: C08F 10/02, C08F 10/00, C08F 2/42, C08F 2/00, C08L 23/04, C08L 23/06

(54) **Multi-stage process for the polymerization of olefins**
Mehrstufiges Verfahren zur Olefinpolymerisation
Procédé multi-étapes pour la polymérisation d'oléfines

(30) Priority: 09.03.1998 EP 98200729
(43) Date of publication of application: 15.09.1999
(73) Proprietor: Basell Poliolefine Italia S.p.A., 20124 Milano (IT)
(72) Inventor: Dall'Occo, Tiziano, 44100 Ferrara (IT); Baruzzi, Giovanni, 44100 Ferrara (IT); Schaverien, Colin J., 1017 XC Amsterdam (NL)
(74) Representative: Colucci, Giuseppe

(56) References cited:
- EP-A- 0 436 328
- WO-A-96/02583
- WO-A-96/11218
- US-A- 5 442 019

## Description

### FIELD OF THE INVENTION

The present invention relates to a multi-stage process for preparing ethylene homo and copolymers having broad molecular weight distributions and low content of soluble fractions, said process comprising a first polymerization stage (A) in the presence of Ti or V catalysts, a treatment stage (B) wherein the Ti or V catalyst is deactivated and a specific metallocene is supported on the polymer produced in stage (A), optionally in the presence of a suitable cocatalyst, and a final polymerization stage (C).

The invention also relates to the broad molecular weight distribution polyethylene obtainable by the above process.

### PRIOR ART DISCLOSURE

Multistage processes for the polymerization of olefins, carried out in two or more reactors, are well known in the state of the art and are particularly interesting in industrial practice. Said processes are generally carried out using the same catalyst in the various stages/reactors, by utilizing tandem reactors operated in series: the product obtained in one reactor is usually discharged and sent directly to the following stage/reactor without altering the nature of the catalyst.

Broad or multi-modal molecular weight distribution (MWD) polyethylenes are commonly prepared by employing a multi-reactor process, wherein ethylene is polymerized in various reactors containing the same catalyst but in the presence of different concentrations of hydrogen, as molecular weight regulator. The thus obtained polymers contain a high molecular weight (HMW) fraction and a low molecular weight (LMW) fraction, therefore showing a broad total molecular weight distribution (MWD = Mw/Mn).

Nevertheless, said polymers present various drawbacks due to the LMW fraction obtained in the reactor with the higher amount of hydrogen; said fraction, having itself a broad MWD, contains undesired soluble products of very low molecular weight, which impair the mechanical properties of the final polymer and do not allow its use in medical and alimentary fields.

Polyolefins having broader MWD are products of notable commercial value, since they show high workability due to the HMW fractions and, at the same time, they provide excellent mechanical properties, due to the LMW fractions. Said polyolefins have been produced even in a single polymerization process, by employing two distinct and separate catalysts in the same reactor each producing a polyolefin having a different MWD. For instance, the European patent application EP 0 128 045 describe the use of a bimetallic catalyst system, i.e. a catalysts system comprising two or more metallocenes, each one having different propagation and termination rate constants, and alumoxanes; the polymers obtained by using said system in a single polymerization process have a broader multimodal molecular weight distribution than using a single metallocene, that usually produces polyethylenes with Mw/Mn of from 2 to 4; nevertheless, the obtained polymers have Mw/Mn lower than 8.

Also the European patent applications EP 0 619 325 and EP 0 705 851 describe the production of multimodal MWD polyolefin from a single polymerization process in the presence of a catalytic system comprising two different metallocenes, wherein at least one of the metallocenes is bridged, generally in the presence of hydrogen as MW regulator. The amount and productivity of the two metallocenes used is varied to control the relative amounts of the HMW and LMW fractions in the final polymer; nevertheless, these parameters are difficult to control and lead to non-homogeneous final products, not uniform in size, having unpredictable properties.

The European patent application EP 0 673 950 describes the preparation of polyethylene having a broad MWD in a gas phase reactor, in the presence of a prepolymer containing a Ti/Zr bimetallic catalyst and of hydrogen. The thus obtained polymers show very low Mn values and are obtained with low activities.

The European patent application EP 0 514 594 describes the production of polymers having multimodal molecular weight distribution in a single polymerization reactor wherein the catalytic system comprises a Mg support, a Ti or V based component, a zirconocene and suitable cocatalysts. Said catalytic system allows bimodal MWD polymers to be obtained; more specifically, the LMW polymer fraction is produced by the metallocene component, while the HMW fraction is due to the Ti or V component.

The several known methods employing mixtures of catalytic systems in one stage polymerization, as described above, have many drawbacks; in particular, the catalyst feed rate is difficult to control and the polymer particles produced are not uniform in size; segregation of the polymer during storage and transfer usually produce non-homogeneous products.

In order to overcome the above difficulties, various solutions have been proposed. The International patent application WO 96/07478 describe a single polymerization process carried out in the presence of a catalyst comprising two different transition metal compounds, each having different hydrogen response characteristics. The proportion of different weight fractions in broad or bimodal molecular weight distribution is controlled by adding a further amount of one of the two components of the bimetallic catalyst. Another solution is that disclosed in the International patent application WO 96/09328, wherein water and/or carbon dioxide are co-fed to the polymerization reactor, containing a bimetallic catalyst, at levels necessary to modify the weight fractions of the HMW and LMW components, thus achieving a target molecular weight distribution. However, the above solutions are still not satisfactory.

The International patent application WO 96/11218, in the name of the same Applicant, describes a multi-stage process for olefin polymerization, in particular for the preparation of heterophase copolymers of propylene, comprising a first stage wherein a first olefin polymer is prepared in the presence of titanium or vanadium catalysts; a second stage of deactivation of the catalyst used in the first stage; and a third stage of polymerization of one or more olefins in the presence of the polymer of the first stage and of a complex of a transition metal M (M being Ti, Zr, V or Hf) containing at least one M-π bond and/or of their reaction products. Said process proved to be particularly useful in the production of polymers with broad MWD, even if the metallocenes used did not allow a sufficiently low Mw to be obtained.

Therefore, it is desirable to provide a novel, high activity process for the production of broad MWD polyethylenes having low xylene soluble fractions, without incurring in the disadvantages of the above discussed prior art.

### SUMMARY OF THE INVENTION

It has now been found that broad MWD ethylene homo and copolymers can be obtained through a multi-stage process, by using a new class of zirconocenes which are unexpectedly able to produce, in high yields, ethylene polymers having fairly low molecular weights and narrow MWD, without necessitating the use of molecular weight regulators, such as hydrogen.

More specifically, the present invention provides a multi-stage process for the polymerization of ethylene, optionally in the presence of one or more α-olefins, comprising from 3 to 10 carbon atoms, to produce a polymer having a broad MWD; said process comprises the following stages:
(**A**) polymerizing ethylene, and optionally said α-olefin, in one or more reactors, in the presence of a catalyst comprising the reaction product between:
   (i) a solid component comprising a compound of a transition metal M¹ selected from Ti and V, not containing M¹-π bonds, and a halide of Mg in active form, optionally comprising an electron-donor compound (internal donor);
   (ii) an alkyl-Al compound and optionally an electron-donor compound (external donor);
   in order to produce an ethylene homo or copolymer;
(**B**) contacting the product obtained in stage (A), in any order whatever, with:
   (a) a compound capable of deactivating the catalyst of stage (A);
   (b) a zirconocene compound of formula (I): 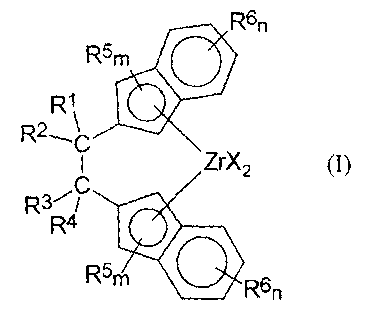 wherein
      R¹, R², R³ and R⁴, the same or different from each other, are selected from the group consisting of hydrogen, linear or branched, saturated or unsaturated, C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more Si or Ge atoms, or wherein two substituents of R¹, R², R³ and R⁴ form a ring having from 4 to 8 carbon atoms;
      R⁵ and R⁶, the same or different from each other, are selected from the group consisting of linear or branched, saturated or unsaturated C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more Si or Ge atoms, or wherein one pair of vicinal R⁶ substituents of the same indenyl group forms a ring having from 4 to 8 carbon atoms;
      m is an integer ranging from 0 to 2; n is an integer ranging from 0 to 4;
      the groups X, the same or different from each other, are hydrogen, halogen, -R, -OR, -SR, -NR₂ or -PR₂, wherein R is selected from the group consisting of linear or branched, saturated or unsaturated, C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more Si or Ge atoms; and
   (c) optionally an activating cocatalyst;
**(C)** polymerizing ethylene and optionally said α-olefin, in one or more reactors, in the presence of the polymer obtained from stage (B).

Another object of the present invention are new polyethylenes obtainable according to the above multi-stage process, having broad MWD, average molecular weights of industrial interest and showing very low xylene soluble fractions. More specifically, the polyethylenes according to the present invention have the following characteristics:
1) intrinsic viscosity (I.V.) ranging from 0.5 to 6 dl/g, preferably from 1 to 4, and more preferably from 1.5 to 3 dl/g;
2) Mw/Mn (i.e. MWD) > 8, preferably > 10, and more preferably > 11;
3) xylene soluble fraction XS<1.2 %wt., preferably < 1 %wt., and more preferably <0.8 %wt.

The broad MWD polyethylenes of the present invention have good processability, while maintaining good mechanical properties.

### DETAILED DESCRIPTION OF THE INVENTION

The multi-stage process for the polymerization of ethylene and optionally α-olefins, and the broad MWD polyethylenes thus obtainable, according to the present invention, will be better described in the following detailed description.

Stages (A)-(C) of the process of the invention are preferably carried out according to the operating conditions given in the cited International patent application WO 96/11218.

The first polymerization stage (A) allows the obtainment of a polymer fraction having high molecular weight, by using a conventional Ti or V-based catalytic system. Said stage (A) can be carried out in liquid phase or in gas phase, working in one or more reactors. The liquid phase can consist of an inert hydrocarbon solvent (suspension process), optionally in the presence of one or more α-olefins, comprising from 3 to 10 carbon atoms. Gas-phase polymerization can be carried out using the known fluidized-bed technique, according to standard procedures, or working in conditions in which the bed is mechanically stirred, optionally in the presence of one or more of said α-olefins.

The catalyst used in the first stage of polymerization (A) comprises the product of the reaction between:
(i) a solid component comprising a compound of a transition metal M¹ selected from Ti and V, not containing M¹-π bonds, supported on a halide of magnesium in active form, optionally comprising an electron-donor compound (internal donor);
(ii) an alkyl-Al compound and optionally an electron-donor compound (external donor).

Said halides of magnesium in active form, preferably MgCl₂, used as a support for Ziegler-Natta catalysts, are widely known from the patent literature. USP 4,298,718 and USP 4,495,338 first described the use of these compounds in Ziegler-Natta catalysis. It is well known that the halides of magnesium in active form, used as support or co-support in components of catalysts for the polymerization of olefins, are characterized by X-ray spectra in which the most intense diffraction line that appears in the spectrum of the non-active halide is diminished in intensity and is replaced by a halo whose maximum intensity is shifted towards lower angles compared with that of the most intense line.

The compound of the transition metal M¹ is selected preferably from the group consisting of halides of titanium, halogen-alcoholates of titanium, VCl₃, VCl₄, VOCl₃ and halogen-alcoholates of vanadium.

Among the titanium compounds, the preferred are TiCl₄, TiCl₃ and the halogen-alcoholates of formula Ti(OR¹)ᵣXₛ, wherein R¹ is a C₁-C₁₂ hydrocarbon radical, or is a group -COR¹; X is halogen and (r+s) is equal to the oxidation state of Ti.

The catalytic component (i) is advantageously used in the form of spheroidal particles with mean diameter ranging from about 10 and 150 µm. Suitable methods for the preparation of said components in spherical form are reported for instance in European patent applications EP 0 395 083, EP 0 553 805, EP 0 553 806.

The internal donor optionally present in the catalytic component (i) can be an ether, an ester, preferably an ester of a polycarboxylic acid, an amine, a ketone; preferably, said internal donor is a 1-3,diether of the type described in European patent applications EP 0 361 493, EP 0 361 494, EP 0 362 705 and EP 0 451 645.

The alkyl-Al compound (ii) is preferably a trialkyl aluminum compound, such as triethyl-Al, triisobutyl-Al, tri-n-butyl-Al, tri-n-hexyl-Al, tri-n-octyl-Al and triisooctyl-Al. It is also possible to use mixtures of trialkyl-Al's with alkyl-Al halides, alkyl-Al hydrides or alkyl-Al sesquichlorides, such as AlEt₂Cl and Al₂Et₃Cl₃.

The external donor present in the catalytic component (ii) can be the same or different from the internal donor. When the internal donor is an ester of a polycarboxylic acid, such as a phthalate, the external donor is preferably a silicon compound of formula R^{II}R^{II}Si(OR^{II})₂, wherein the groups R^{II}, the same or different from each other, are C₁-C₁₈ alkyl, cycloalkyl or aryl radicals. Particularly advantageous examples of such silanes are methylcyclohexyldimethoxysilane, diphenyldimethoxysilane, methyl-t-butyldimethoxysilane and dicyclopentyldimethoxysilane.

The polymer obtained from the polymerization stage (A) has preferably a porosity, expressed as percentage of voids, higher than 5%, preferably higher than 10%, and more preferably higher than 15%. Said polymer is preferably characterized by macroporosity, wherein more than 40% of the porosity of the said polymers is due to pores with diameter higher than 10,000 Å; more preferably, more than 90% of the porosity is due to pores with diameter higher than 10,000 Å. The porosity, expressed as percentage of voids, and the distribution of pore radius are determined by absorption of mercury under pressure, according to the procedure reported in WO 96/11218.

The amount of polymer produced in the first stage of polymerization (A) is generally greater than 1000 g/g of solid component, preferably greater than 2000 g/g, more preferably greater than 3000 g/g. The amount of polymer produced in polymerization stage (A) is preferably between 10 and 90% by weight relative to the total amount of polymer produced in stages (A) and (C) and more preferably is between 20 and 80%.

Stage (B) envisages, in any order whatever, the deactivation of the titanium-based catalyst used in stage (A) and the supportation of the above specified zirconocene (I), and optionally of a suitable cocatalyst, on the polymer obtained in stage (A).

According to a preferred embodiment of the multi-stage process of the invention, in stage (B), the product obtained from stage (A) is first contacted with said compound (a) capable of deactivating the catalyst used in stage (A); then, the deactivated product thus obtained is contacted, in any order whatever, with said zirconocene compound (b) and optionally said activating cocatalyst (c).

Preferably, after the treatment with the deactivating compound (a), any excess of the deactivating compound is removed, according to procedures known in the state of the art.

More specifically, stage (B)(a) comprises bringing into contact the polymer produced in polymerization stage (A) with compounds that are able to deactivate the catalyst used in said stage (A). The deactivation stage (B)(a) is necessary so as to avoid that the titanium based catalyst used in stage (A) is active in the polymerization stage (C), that would lead to the production of a too high molecular weight polymer, which would be unprocessable.

Stage (B)(b) comprises bringing into contact the product obtained in (a) with a zirconocene of formula (I), preferably a solution of the zirconocene of formula (I) in hydrocarbon solvents (benzene, toluene, heptane, hexane, liquid propane and the like), in order to support said zirconocene on the polymer obtained from stage (A).

Stage (B)(c), which can be carried out before, after or at the same time as (B)(b), comprises bringing into contact the product obtained in (a) with a suitable cocatalyst.

Examples of compounds that can be used in treatment stage (a) can be selected from the group consisting of compounds having the general formula R^{III}y₋₁XH, wherein R^{III} is hydrogen or a C₁-C₁₀ hydrocarbon group; X is O, N, or S; and y is the oxidation state of X. Non-limiting examples of such compounds are represented by alcohols, thioalcohols, mono- and di-alkylamines, NH₃, H₂O and H₂S. Preferred compounds are those in which X is O and particularly preferred is water.

Other examples of compounds that can be used in treatment stage (B)(a) are CO, COS, CS₂, CO₂, O₂ and acetylenic or allenic compounds.

The molar ratio between the deactivating compound and the compound of the transition metal M¹ should preferably be such as to ensure substantial deactivation of the catalyst of stage (A). The value of this ratio is preferably greater than 50, more preferably greater than 150 and in particular greater than 250.

Treatment (a), in which these deactivating compounds are brought into contact with the polymer produced in stage (A), can be effected in various ways. In one of these, the polymer is brought into contact, for a time ranging from 1 minute to some hours, with a hydrocarbon solvent that contains the deactivating compound in solution, suspension or dispersion. An example of dispersion of the deactivating compound in a hydrocarbon solvent is represented by humidified hexane. At the end of treatment (a), the liquid is removed and the polymer undergoes treatment (b).

In the zirconocenes of formula (I) used in stage (B)(b):
R¹, R², R³ and R⁴ are preferably selected from the group consisting of hydrogen, methyl, ethyl, propyl, phenyl and benzyl; more preferably, R¹, R², R³ and R⁴ are hydrogen and the bridging group of the 2-indenyls is ethylene;
R⁵ and R⁶ are preferably selected from the group consisting of methyl, ethyl, propyl, phenyl and benzyl;
the groups X are preferably selected from the group consisting of Cl, Br or methyl.

Non-limiting examples of zirconocene compounds belonging to the said class are:
1,2-ethylene-bis(2-indenyl)zirconium dichloride,
1,2-ethylene-bis(1,3-dimethyl-2-indenyl)zirconium dichloride,
rac- and meso-1,2-ethylene-bis(1-methyl-2-indenyl)zirconium dichloride,
rac- and meso-1,2-ethylene-bis(1-ethyl-2-indenyl)zirconium dichloride,
rac- and meso-1,2-ethylene-bis(4-phenyl-2-indenyl)zirconium dichloride and
rac- and meso-1,2-ethylene-bis(1-methyl-4-phenyl-2-indenyl)zirconium dichloride.

The zirconocene compounds of formula (I) can be prepared by reaction of the corresponding ligands first with a compound capable of forming a delocalized anion on the cyclopentadienyl ring, and then with a compound of formula ZrZ₄, wherein the substituents Z, the same or different from each other, are halogen; ZrCl₄ is particularly preferred.

When, in the zirconocene of formula (I) one or more X are other than halogen, it is necessary to substitute one or more substituents Z of the zirconocene dihalide with one or more substituents X other than halogen. The substitution in the zirconocene halide of Z with X other than halogen can be carried out by standard procedures, known in the state of the art, for example by reacting the zirconocene halide with alkylmagnesium halides (Grignard reagents) or with alkyllithium compounds.

The ligands useful to prepare the zirconocenes of the present invention can be synthesized by different procedures, and preferably as described in the European patent appl. no. 98200728.8 in the name of the same Applicant.

In stage (B)(c) of the process of the invention, suitable activating cocatalysts are organometallic aluminum compounds; particularly suitable are the organometallic aluminum compounds described in European patent application EP 0 575 875 (formula (II)) and those described in International patent application WO 96/02580 (formula (II)). Non-limiting examples of said organometallic aluminum compounds are:
tris(methyl)aluminum, tris(isobutyl)aluminum, tris(isooctyl)aluminum bis(isobutyl)aluminum hydride, methyl-bis(isobutyl)aluminum, dimethyl(isobutyl)aluminum, tris(isohexyl)aluminum, tris(benzyl)aluminum, tris(tolyl)aluminum, tris(2,4,4-trimethylpentyl)aluminum, bis(2,4,4-trimethylpentyl)aluminum hydride, isobutyl-bis(2-phenyl-propyl)aluminum, diisobutyl-(2-phenyl-propyl)aluminum, isobutyl-bis(2,4,4-trimethyl-pentyl)aluminum and diisobutyl-(2,4,4-trimethyl-pentyl)aluminum.

The use of the above organometallic aluminum compounds is particularly advantageous when water is used, in stage (B)(a), as compound capable of deactivating the catalyst of stage (A).

The activating cocatalysts in stage (B)(c) of the process of the invention can even be the reaction product between water and one or more of the above-reported organometallic aluminum compounds.

Suitable activating cocatalysts in stage (B)(c) of the process according to the present invention are linear, branched or cyclic alumoxanes of formula: 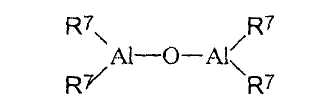 wherein the substituents R⁷, the same or different from each other, are linear or branched, saturated or unsaturated, C₂-C₂₀ alkyl, cycloalkyl, aryl, arylalkyl or alkylaryl radicals, or are groups -O-Al(R⁷)₂.

Examples of alumoxanes suitable for use according to the present invention are methylalumoxane (MAO), tetra-isobutyl-alumoxane (TIBAO), tetra-2,4,4-trimethylpentylalumoxane (TIOAO) and tetra-2-methyl-pentylalumoxane. Mixtures of different alumoxanes can also be used.

Mixtures of different organometallic aluminum compounds and/or alumoxanes can also be used.

Further suitable activating cocatalysts in stage (B)(c) of the process of the invention are compounds capable of forming an alkyl zirconocene cation. Non-limiting examples are the compounds of formula Y⁺Z⁻, wherein Y⁺ is a Bronsted acid, capable of donating a proton and of reacting irreversibly with a substituent X of the compound of formula (I), and Z⁻ is a compatible non-coordinating anion, capable of stabilizing the active catalytic species originating from the reaction of the two compounds, and sufficiently labile to be displaced by an olefinic substrate. The Z⁻ anion preferably comprises one or more boron atoms; more preferably, Z⁻ is an anion of formula BAr₄⁽⁻⁾, wherein the Ar substituents, the same or different from each other, are aryl radicals, such as phenyl, pentafluorophenyl and bis-(trifluoromethyl)phenyl. Tetrakis-pentafluorophenyl borate is particularly preferred. Moreover, compounds of formula BAr₃ can be advantageously used.

Treatment stage (B)(b) is preferably carried out using the zirconocene in solutions of hydrocarbon solvents containing a dissolved activating cocatalyst, according to stage (B)(c), which is preferably an alkyl-aluminum compound, such as triisobutyl-aluminum (TIBA), tris(2,4,4-trinethyl-pentyl)aluminum (TIOA) and/or an aluminoxane, for example methylalumoxane (MAO), tetra-isobutylalumoxane (TIBAO), tetra(2,5-dimethylhexyl)-alumoxane and tetra(2,4,4-trimethyl-pentyl)alumoxane (TIOAO).

The molar ratio of the alkyl-Al compound to the zirconocene is greater than 2 and is preferably between 5 and 1000. The stage (B)(b) can be carried out by suspending the polymer obtained from stage (B)(a) in hydrocarbon solvents, preferably propane, containing the dissolved zirconocene, and optionally an alkyl-Al compound and/or an aluminoxane (B)(c), generally working at temperature between 0 and 100°C , preferably between 10 and 60°C, and removing the solvent propane at the end of the treatment. Alternatively, the polymer obtained from (a) can be brought into contact, dry, with solutions of the zirconocene containing the minimum quantity of solvent for keeping the said compound in solution.

Stage (B) can be conveniently carried out in the gas phase in a loop reactor, in which the polymer produced in the first stage of polymerization is circulated by a stream of inert gas. Solutions of the deactivating compound and of the zirconocene are fed successively, for example using a sprayer, to the loop reactor in the gas phase, and a free-flowing product is obtained at the end of the treatment. Conveniently, before stage (b), the product is treated with compounds that are able to decontaminate the system, for example with alkyl-Al compounds.

The quantity of zirconocene, expressed as metal, contained in the product obtained from stage (B), can vary over a wide range depending on the zirconocene used and on the relative quantity of product that it is desired to produce in the various stages. Generally this quantity is between 1·10⁻⁷ and 5·10⁻³ g of Zr/g of product, preferably between 5·10⁻⁷ and 5·10⁻⁴, more preferably between 1·10⁻⁶ and 1·10⁻⁴.

The polymerization stage (C) can be carried out in liquid phase or in gas phase, working in one or more reactors, and it is directed to the synthesis of the low molecular weight polymer fraction. The liquid phase can consist of an inert hydrocarbon solvent (suspension process), optionally in the presence of one or more α-olefins, comprising from 3 to 10 carbon atoms. Gas-phase polymerization can be carried out in reactors with a fluidized bed or with a mechanically-stirred bed, optionally in the presence of one or more of said α-olefins. During said stage (C), it is convenient to feed the polymerization reactor with an alkyl-Al compound selected from Al-trialkyls, wherein the alkyl groups contain from 1 to 12 carbon atoms, and linear or cyclic aluminoxane compounds containing -(R₇)AlO-, wherein R₇ has the meaning reported above, said aluminoxane compounds containing from 1 to 50 repeating units. As a general rule, said alkyl-Al compound is fed to polymerization stage (C) when treatment (c) in stage (B) is absent.

The process of the invention allows the preparation of ethylene polymers having broad MWD, average molecular weights of industrial interest and low xylene soluble fractions.

Therefore, another object of the present invention are broad MWD polyethylenes obtainable by the multi-stage process according to the present invention, said polyethylenes having the following characteristics:
1) intrinsic viscosity (I.V.) ranging from 0.5 to 6 dl/g, preferably from 1 to 4 dl/g, and more preferably from 1.5 to 3 dl/g;
2) molecular weight distribution Mw/Mn > 8, preferably > 10, and more preferably >11;
3) cold xylene solubility XS<1.2 %wt., preferably <1 %wt., and more preferably <0.8 %wt.

Said polyethylenes, having a broad MWD, show very good processability properties and, at the same time, maintain excellent mechanical properties.

The following examples are reported for illustrative and not limiting purposes.

### GENERAL PROCEDURES AND CHARACTERIZATIONS

All the operations with the catalytic systems, the metallocenes and the aluminum alkyls were carried out under nitrogen atmosphere.

All the polymerization solvents were used after drying over molecular sieves, deoxygenated and distilled over LiAlH₄ or aluminum tri-isobutyl; ethylene was used as polymerization grade reagent; 1-hexene was dried over alumina and distilled over LiAlH₄.

**TIBAL** (triisobutyl aluminum) was purchased from Witco and used as a 1M solution in hexane.

**TIOA** (tris-2,4,4-trimethyl-pentyl aluminum) was purchased from Witco and diluted to a 1M solution in heptane.

**MAO** (methyl alumoxane) was purchased from Witco as a 10% w/w solution in toluene; said solution was dried under vacuum, at 60°C, to obtain a white free-flowing powder.

Said powder was solubilized in toluene (1M solution) before use.

The metallocenes and their intermediates were characterized by the following methods: ^{**1**}**H-NMR** and ^{**13**}**C-NMR**

The ¹H-NMR and ¹³C-NMR spectra were recorded in CD₂Cl₂ (referenced against the middle peak of the triplet of residual CHDCl₂ at 5.35 ppm) and C₆D₆ (referenced against residual C₆D₅H at 7.15 ppm), using a Varian Gemini 300 (¹H NMR at 300 MHz, ¹³C NMR at 75.4 MHz) or a Varian XL 200 (¹H NMR at 200 MHz, ¹³C NMR at 50.1 MHz). All NMR solvents were dried over 4Å molecular sieves before use. Preparation of the samples was carried out under nitrogen, using standard inert atmosphere techniques; the measurements were performed at 20°C.

The polymers were characterized by the following methods:

### INTRINSIC VISCOSITY (I.V.)

The measurement were done in tetrahydronaphtalene (THN) at 135°C.

### DENSITY

The polymers density was determined by density gradient columns, according to ASTM D-1505.

### XYLENE SOLUBILITY (XS)

Solubility in o-xylene at 25°C was evaluated by solubilizing 2.5 g of the polymer under evaluation in 250 ml of o-xylene. The solubilization was carried out under nitrogen, at a temperature of 135°C, After 1 hour, the solution was cooled to 100°C in air and then was cooled to 25°C with a bath of water. After filtration, the solution was evaporated under nitrogen stream, on a plate heated at 140°C, thus obtaining the o-xylene soluble polymer fraction at 25°C. Said fraction was dried in oven, in vacuum at 70°C, till the obtainment of a constant weight, and the obtained product was weighted.

### SIZE EXCLUSION CROMATOGRAPHY (SEC)

Molecular weights Mn, Mw and Mz, and the molecular weight distribution (Mw/Mn) were determined by SEC analysis performed by using a "WATERS 200" GPC instrument working at 135°C in 1,2-dichlorobenzene stabilized with BHT (2,6-di-t-butyl-4-methylphenol) 0.1 wt%.

### MELT INDEX (MI)

Melt index values were measured at 190°C following ASTM D-1238, over a load of 2.16 Kg (MI E) or 21.6 Kg (MI F). The melt flow ratio F/E represents the ratio MI F/MI E.

### SYNTHESIS 1

### 1,2-ETHYLENE-BIS(2-INDENYL)ZIRCONIUM DICHLORIDE

### (a) Preparation of the ligand 1,2-bis(2-indenyl)ethane

### Preparation of the diethyl ester of 2,5-dibenzyl-adipic acid from diethyl adipate

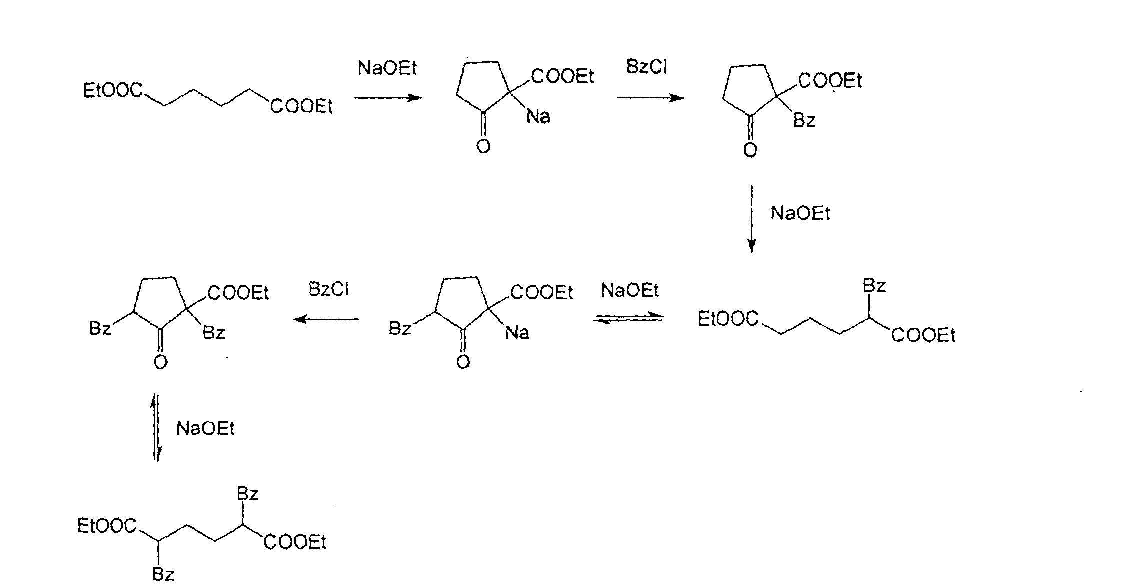

487 g of NaOEt (6.87 mol, 1.2 equivalents) were suspended in 3.54 kg of THF, in a 10 L cylindrical double-walled glass reactor, equipped with overhead stirrer and oil heating/cooling bath. The obtained suspension was heated to 60°C and 1170 g (5.73 mol) of diethyl adipate were added, over a period of 1 hour.

The reaction mixture was stirred for 16 hours, at 60°C, and 820 g (6.41 moles, 1.12 equivalents) of benzyl chloride were added, over a period of 3.75 hours. The resulting product, the diethyl ester of 2-benzyl adipic acid, was maintained under stirring for other 3.5 hours, at 60°C, and the mixture was then allowed to cool to room temperature. 487 g (6.87 moles, 1.2 equivalents) of NaOEt were added to the mixture, over a period of 2 hours, at 23°C, and the reaction was then slowly warmed to 60°C, for 4 hours, and finally stirred for 16 hours at 60°C.

To the thus obtained mixture were then added 879 g (6.87 moles, 1.2 equivalents) of benzyl chloride, over a period of 1.75 hours. The reaction mixture was stirred at 65°C for 6 hours and then cooled to 30°C; an additional 100 g (1.47 moles) of NaOEt were added and, after 5 hours at 60 °C, further 207 g (1.62 moles) of benzyl chloride were added, over a period of 1.75 hours, in order to convert the unreacted NaOEt into PhCH₂OEt. After 2 hours at 60 °C, to the obtained mixture were added 224 g (4.87 moles, 0.85 equivalents) of EtOH and the reaction mixture was allowed to cool to 25°C. After the addition of 2,800 ml dilute HCI (pH 2), 1.43 kg toluene were added and the organic and aqueous layers were separated. The solvents were removed on a rotary evaporator and the higher boiling fractions (namely the excess of benzyl chloride and benzyl ether) were removed on a Schlenk line, at 100°C.

This purification procedure gave 2,035 g of dibenzyl adipate, having a purity of 95% (92 % yield).
¹H NMR (CDCl₃): δ 7.37-7.1 (m, 10H), 4.04 (q, 4H, CH₂), 2.9 (m, 2H), 2.7 (m, 2H), 2.6 (m, 2H), 1.65 (m, 2H), 1.55 (m, 2H), 1.13 (t, 3H, Me), 1.125 (t, 3H, Me).
¹³C NMR (CDCl₃): δ 174.8 and 176.26 (COOH, diastereomers), 138.86 (C), 128.6 (CH), 128.06 (CH), 126.06 (CH), 59.91 (CH₂), 47.17 and 46.88 (CH, diastereomers), 38.18 and 38.03 (CH₂, diastereomers), 29.28 and 29.18 (CH₂, diastereomers), 13.90 (Me).

### De-esterification of the diethyl ester of 2,5-dibenzyl-adipic acid

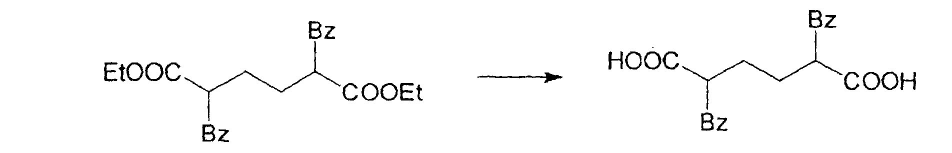

In a 3 L 3-neck round bottom flask, equipped with an overhead stirrer, were added 723 g (1.89 moles) of diethyl ester of 2,5-dibenzyl-adipic acid, obtained as described above, and 910 ml (5.67 moles) of Claisen alkali solution (a 6.25M solution of KOH in a 1:3/H2O:MeOH (v/v) mixture) and the obtained mixture was heated to 90°C. After 3 hours, the reaction mixture was cooled and transferred to a 2 L flask, and the MeOH removed on a rotary evaporator. The mixture was then washed with 800 mL ether, in order to remove organic impurities, and the obtained viscous water solution was poured into a 5 L beaker, diluted with 1 L water and cooled using an ice bath, to a temperature of about 10°C. To the solution, maintained under constant stirring, was slowly added concentrated HCI, always maintaining the temperature at about 10-15°C.

At a pH value of about 3, a copious white/beige powdery precipitate formed; concentrated HCl was added until a pH of 1 to 2 was reached, obtaining a final solution of about 4 L. The white precipitate was isolated by filtration and washed with 300 ml water, thus obtaining 2,5-dibenzyl-adipic acid as a powder. After drying in a vacuum oven (at 200 mmHg, under nitrogen stream, at 70°C, to remove residual water) to constant weight, 598 g of pure 2,5-dibenzyl-adipic acid were isolated (yield 97 %wt.). ¹H NMR (CD₃OD, 300 MHz): δ 7.10 (m, 10H, aromatic), 2.90 (m, 2H), 2.70 (m, 4H), 1.60 (m, 4H) ppm.
¹H NMR (d⁸-THF): δ 10.7 (br s, 2H, OH), 7.21-7.08 (m, 10H), 2.9 (dd, 2H), 2.62 (dd, 2H), 2.56 (m, 2H), 1.70 (m, 2H), 1.52 (m, 2H).
¹³C NMR (d⁸-THF): δ 176.3 and 176.26 (COOH, diastereomers), 140.84 (C), 129.75 (CH), 128.88 (CH), 126.74 (CH), 47.94 and 47.82 (CH, diastereomers), 39.00 and 38.9 (CH₂, diastereomers), 30.33 and 30.36 (CH₂, diastereomers).

### Preparation of 2,5-dibenzyl-adipic acid dichloride

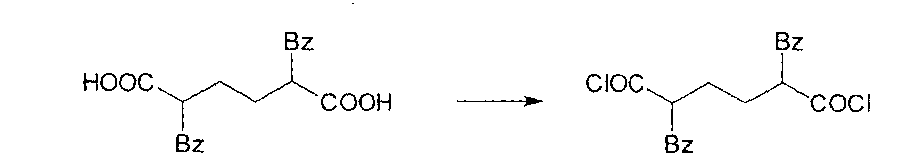

In a 2 L pear-shaped flask, were added 598 g (1.833 moles) of the 2,5-dibenzyl-adipic acid, prepared as described above, and 2,050 ml of SOCl₂ (17.22 mol, density = 1.63 g/mL). The obtained mixture was stirred for 16 hours, at 20°C, and then heated at 55°C for 7 hours, thus giving a homogeneous solution; a rapid but controlled gas evolution was observed.

After removal of SOCl₂ in excess, under vacuum at a bath temperature of 60°C, 300 mL toluene were first added and subsequently removed under vacuum, at 50 °C, in order to remove any residual SOCl₂. A viscous light brown oil was isolated, which proved to be 2,5-dibenzyl-adipic acid dichloride (two diastereisomers were obtained).
¹H NMR (CDCl₃, 300 MHz): δ 7.4 - 7.2 (m, 8H, aromatic H), 3.14 (m, 4H), 2.87 (m, 2H), 1.80 (m, 4H) ppm.
¹³C NMR (CDCl₃, 75 MHz): δ 28.23 (CH₂), 28.33 (CH₂), 37.48 (CH₂), 37.70 (CH₂), 58.43 (CH), 58.54 (CH), 127.3 (CH, aromatic), 128.95 (CH, aromatic), 129.06 (CH, aromatic), 137.1 (C), 176.15 (C=O) ppm.

### Conversion of 2,5-dibenzyl-adipic acid dichloride to the corresponding bis(indanone)

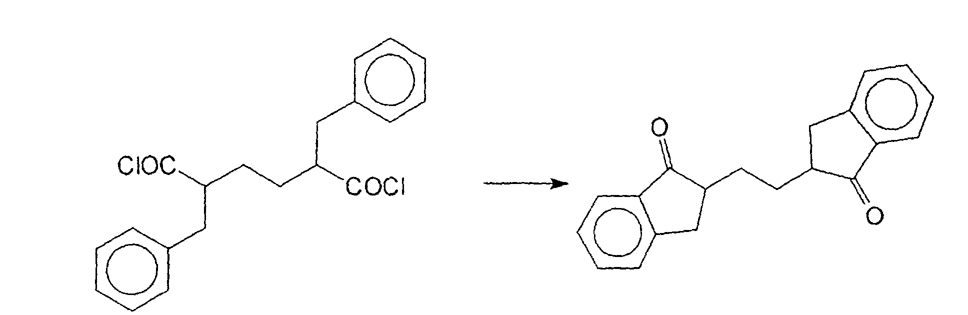

In a 3 L 3-neck flask, equipped with a large dropping funnel and kept under nitrogen, 605 g (4.53 moles; 24 % excess) of AlCl₃ (99 %. from Aldrich) were suspended in 800 mL of CH₂Cl₂, previously dried over molecular sieves; to the obtained suspension was slowly added, over a period of 3 hours, the 2,5-dibenzyl-adipic acid dichloride, prepared as described above, previously dissolved in 1200 ml of CH₂Cl₂. After stirring for 16 hours at 20°C, venting away the formed HCI, an orange suspension was obtained. This was carefully poured into a water/ice mixture, in a 5 L beaker, and the yellow CH₂Cl₂ layer was separated; the aqueous phase was extracted with 4 x 250 ml of CH₂Cl₂. The CH₂Cl₂ fractions were collected together and dried with anhydrous MgSO₄, thus obtaining a clear red-orange solution. Said solution was filtered and the solvent removed in vacuum, to afford a slightly sticky white solid. After washing with 500 ml pentane, 598 g of the bis(indanone) were isolated in the form of a white powder (yield 93 %wt. from 2,5-dibenzyl-adipic acid).
¹H NMR (CDCl₃, 300 MHz): δ 7.7 - 7.3 (m, 8H, aromatic H), 3.3 (dd, 2H), 2.85 (m, 2H), 2.63 (m, 2H), 2.1 (m, 2H), 1.60 (m, 2H) ppm.
¹³C NMR (CDCl₃, 75 MHz): δ 28.6 (CH₂), 29.3 (CH₂), 32.47 (CH₂), 32.69 (CH₂), 46.94 (CH), 47.47 (CH), 123.9, 126.65 (CH, aromatic), 127.44 (CH), 134.85, 136.71, 153.78, 208.6 (C=O) ppm.

### Conversion of the above bis(indanone) to the corresponding diol

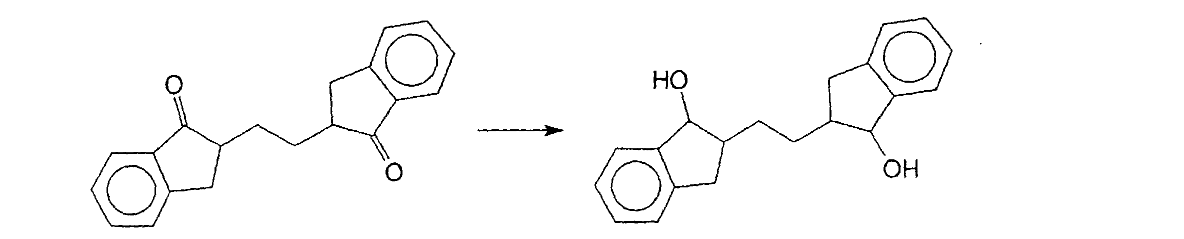

In a 5 L beaker, 494 g (1.70 moles) of the bis(indanone) prepared as described above were suspended in 3 L of THF and 1 L MeOH. After cooling the obtained mixture to about 10°C, with an ice bath, 71 g (1.87 moles) of NaBH₄ were slowly added, over a period of 3 hours, maintaining the suspension under vigorous stirring. The addition of NaBH₄ resulted in immediate gas evolution. The reaction mixture was maintained under stirring for 16 hours, at 20°C, and then THF and MeOH were removed on a rotary evaporator, thus giving a thick beige slurry. 2 L of water were added to said slurry and the obtained mixture was acidified with dilute HCl till a pH value of 3; a beige powder precipitated and was isolated by filtration. Said powder was extensively washed with water and finally dried to constant weight in a vacuum oven, at 75°C, finally obtaining 506 g of diol.
¹H NMR (CDCl₃, 300 MHz): δ 7.05 - 7.4 (m, 10H, aromatic), 5.13 (d, J = 6), 5.05 (dd, J = 6), 4.87 (d, J = 6) total 2H, 3.1 (m), 2.9 (m), 2.75 (m), 2.5 (m), 2.4 - 2.1 (m), 2.0 - 1.6 (m) ppm.

### Dehydration of the diol to give 1,2-bis(2-indenyl)ethane

300g of the diol prepared as described above were placed in a 1 L 3 neck round-bottom flask, in a heating mantel; this was heated to a temperature of about 260°C, under nitrogen stream to remove water. The diol melted at about 190°C. The thermolysis was stopped after about 2 hours, thus obtaining a product in the form of a "melted glass"; to this product were added 500 ml of CH₂Cl₂, by stirring and scratching in order to solubilize said melted glass. The resulting mixture was filtered through a frit, thus isolating the insoluble product, that resulted to be 1,2-bis(2-indenyl)ethane. After washing with pentane, 33.7 g of 1,2-bis(2-indenyl)ethane with a purity of 98.95 % (GLC analysis) was isolated, in the form of a white powder.

CH₂Cl₂ was removed under vacuum from the CH₂Cl₂-soluble fraction, to give a slightly oily orange powder. Said powder was washed with pentane to give 74.4 g of 1,2-bis(2-indenyl)ethane in the form of a 96 % pure light beige powder.

Totally were isolated 108.1g of the desired ligand 1,2-bis(2-indenyl)ethane, with a 42 % yield.
¹H NMR (CDCl₃): δ 7.5 - 7.1 (m, 4H), 6.63 (s, 1H), 3.39 (s, 2H, CH₂), 2.86 (s, 2H, CH₂).
¹³C NMR (CDCl₃): δ 150.1, 145.9, 143.4, 127.1, 126.7, 124.2, 123.8, 120.5, 41.5 (CH₂), 31.0 (CH₂).

### (b) Preparation of the zirconocene dichloride

In a 2 L 3-necks round bottom flask, under nitrogen stream, to 146 g (0.566 moles) of 1,2-bis(2-indenyl)ethane was added 1 L Et₂O and the obtained mixture was cooled to -5°C by means of a ice/salt bath. To this mixture were slowly added 475 ml of a 2.5 M n-BuLi solution in hexane (2.1 equivalents), over a period of about 2.5 hours. A beige slurry of the dianion was obtained. After having completed the addition, the mixture was stirred for a further 30 minutes, without ice bath, leading to a temperature of 14°C. The volume of the obtained solution was reduced to about 1 L, by removing the solvent under vacuum. This solution was then cooled to -78°C and added to a suspension of 132 g (0.566 moles) of ZrCl₄ in 500 ml of CH₂Cl₂, in a 2L 3-necks round bottom flask, previously cooled to -78°C. A bright yellow suspension was rapidly obtained. Said suspension was allowed to warm slowly to 20°C and was stirred for further 16 hours, at 20°C. The solvent was then removed under vacuum, to give a light yellow powder. The pure final product was separated from LiCl and from polymeric byproducts by Soxhlet extraction with CH₂Cl₂, thus obtaining 197 g of 1,2-ethylene-bis(2-indenyl)zirconium dichloride (yield of 83 %wt.).
¹H NMR (C₆D₆): δ 7.5 (dd, 4H), 6.95 (dd, 4H), 5.85 (s, 4H), 2.52 (s, 4H).
¹H NMR (CD₂Cl₂): δ 7.5 (dd, 4H), 7.15 (dd, 4H), 6.42 (s, 4H), 3.33 (s, 4H).
¹³C NMR (CD₂Cl₂): δ 140.6 (2C), 129.4 (4C), 126.1 (4CH), 125.5 (4CH), 103.1 (4CH), 31.1 (2CH₂).

Elemental analysis:
Calculated: C 57.40; H 3.85. Found: C 57.29; H 4.00.

### SYNTHESIS 2

### Rac- AND meso-1,2-ETHYLENE-BIS(1-METHYL-2-INDENYL) ZIRCONIUM DICHLORIDE

### (a) Preparation of the ligand 1,2-bis(1-methyl-2-indenyl)ethane

1.5 g (5.8 mmol) of 1,2-bis(2-indenyl)ethane, prepared as described in the above reported Synthesis 1(a), was dissolved in 25 ml THF and cooled to 0°C. n-BuLi (7.4 ml of a 1.6 M solution in hexane) was added and the resulting orange/brown solution stirred for 1 hour. This was added via a cannula to a solution of MeI (0.9 ml, 14.5 mmol) dissolved in 10 ml THF, at 0°C. After 2 hours, the THF was removed under vacuum and Et₂O was added. This Et₂O solution was washed 3 times with a saturated solution of NaHCO₃ and 3 times with a saturated aqueous solution of NaCl. After drying over MgSO₄, 1.4 g of yellow crystalline 1,2-ethylene-bis(1-methyl-2-indenyl)ethane was obtained. The ratio of double bond isomers is ca. 10:1. NMR data are reported for the major double bond isomer, i.e. the *rac*-isomer.
¹H NMR (CDCl₃): δ 7.45 - 7.10 (m, 8H), 6.53 (s, 2H), 3.43 - 3.30 (m, 2H, CHMe), 2.90 - 2.60 (m. 4H, CH₂-bridge), 1.36 (d, 6H, 7.5 Hz, Me).
¹³C NMR (CDCl₃): δ 154.7 (C), 148.8 (C), 144.0 (C), 126.5 (CH), 124.8 (CH), 123.9 (CH), 122.5 (CH), 120.0 (=CH), 46.2 and 46.0 (asymmetric CHMe), 28.1 (CH₂-bridge), 15.8 (Me).

### (b) Preparation of the zirconocene

4.1 ml of a solution 2.5 M of n-BuLi in hexane were added to 1.4 g 1,2-ethylene-bis(1-methyl-2-indenyl)ethane, prepared as described above, in 50 ml Et₂O cooled to 0°C. After 45 minutes, Et₂O was removed in vacuum and the resulting dianion was suspended in 80 ml toluene, at 20°C, in a drybox. 1.15 g (4.93 mmol) of ZrCl₄, in the form of a slurry in 10 ml toluene, were added and the reaction mixture changed from yellow to dark brown. After stirring for 21 hours at 20°C, the toluene solution was separated by centrifugation and the remaining solid was extracted with 3x25 ml toluene. The toluene extracts were combined, concentrated and crystallized at -35°C, thus giving 300 mg of *rac*-1,2-ethylene-bis(1-methyl-2-indenyl)zirconium dichloride. The toluene-insoluble precipitate obtained from the reaction mixture was extracted with CH₂Cl₂; CH₂Cl₂ was removed in vacuum, thus giving a yellow powder. This was washed with 2x5 ml pentane to afford 230 mg of pure *meso*-1,2-ethylene-bis(1-methyl-2-indenyl)zirconium dichloride.

### Rac-isomer:

¹H NMR (C₆D₆): δ 7.54 - 7.34 (m, 4H), 7.21 - 7.10 (m, 4H), 6.16 (s, 2H, =CH), 3.63 - 3.45 (m, 2H, CH₂ bridge), 3.20 - 3.03 (m, 2H, CH₂ bridge), 2.48 (s, 6H, Me).
¹³C NMR (CD₂Cl₂): δ 137.7 (C), 129.8 (C), 128.9 (C), 126.2 (CH), 125.6 (CH), 125.4 (CH), 123.5 (CH), 116.3 (C-Me), 97.9 (CH), 27.6 (CH₂-bridge), 11.81 (Me).

### Elemental analysis:

Calculated: C 59.18; H 4.51. Found: C 58.94; H 4.57.

### Meso-isomer:

¹H NMR (C₆D₆): δ 7.54 - 7.46 (m, 2H), 7.41 - 7.33 (m, 2H), 7.24 - 7.06 (m, 4H), 6.71 (s, 2H, =CH), 3.55 - 3.25 (m, 4H, CH₂ bridge), 2.44 (s, 6H, Me).
¹³C NMR (CD₂Cl₂): δ 137.1 (C), 130.3 (C), 128.1 (C), 126.3 (CH), 125.8 (CH), 125.3 (CH), 123.6 (CH), 116.6 (C-Me), 101.0 (CH), 28.9 (CH₂-bridge), 11.79 (Me).

### EXAMPLES 1-7

### STAGE (A)

A 4.25 L stainless-steel autoclave, equipped with an helicoidal magnetic stirrer, temperature and pressure indicator, feeding lines for ethylene, propane, propylene and hydrogen, and a steel vial for the injection of the catalyst, was purified by flushing ethylene at 80°C and washed with propane. In a Schlenk tube, under nitrogen atmosphere, at room temperature, were added 2 ml of a 1M hexane solution of triisobutylaluminium (2 mmoles), then 0.033 mmole of cyclohexyl-methyl-dimethoxy-silane and thereafter 20.3 mg of a solid catalytic component, prepared according to Example 3 of the European patent application EP 0 395 083 (Ti content, 1.96 wt. %). After 5 minutes aging, the content of the Schlenk tube was introduced into the autoclave in propane flow. The autoclave was closed and 125 g of propane and 20 g of propylene were introduced, slowly stirred for 45 minutes at 30°C, and for 45 minutes at 75°C. Finally, 280 g of propane, 7.2 bar partial pressure of ethylene and 1.8 bar partial pressure of hydrogen were added. By continuous stirring, a total pressure of 36.4 bar was maintained at 75°C, for 60 minutes, by feeding ethylene (320 g). At the end of the reaction, the reactor was depressurized; the polymerization conditions and the characterization data of the polymers obtained in the present stage are indicated in Table 1.

### STAGE (B)

To the polymer (300 g) obtained from stage (A) water was added and the obtained mixture was slurred, at 40°C, in 250 g of propane and stirred 30 minutes. This deactivation stage was followed by the injection of hexane solution of TIOA and of 1,2-ethylene-bis(2-indenyl)zirconium dichloride, obtained as described above, aged 5 minutes at room temperature, with a molar ratio Al/Zr of 500. The resulting slurry was stirred at 40°C for further 10 minutes and propane was slowly flashed, under continuous stirring. The amounts of the used compounds are indicated in Table 2.

### STAGE (C)

Over a period of 5-10 minutes, the temperature was risen to 80°C and the autoclave pressurized with ethylene under stirring. The total pressure was maintained for 137 minutes. The autoclave was rapidly degassed, flushed with nitrogen and opened, and the obtained polymer was completely dried in a oven at 60°C, under vacuum. The polymerization conditions and the characterization data of the polymers obtained in this stage are reported in Table 2. The characterization data of the final polymers are reported in Table 3.

### EXAMPLE 8

The procedure described in Examples 1-7 was repeated, with the exception that, in stage (B), *rac*-1,2-ethylene-bis(1-methyl-2-indenyl)zirconium dichloride was used instead of ethylene-bis(2-indenyl)zirconium dichloride.

The polymerization conditions and the characterization data of the polymers obtained in the single stages are reported in Tables 1 and 2; the characterization data of the final polymer are reported in Table 3.

### COMPARATIVE EXAMPLE A

The procedure described in Examples 1-7 was repeated, with the exception that no water was used in stage (B). The polymerization conditions and the characterization data of the polymers obtained in the single stages are reported in Tables 1 and 2; the characterization data of the final polymer are reported in Table 3.

The obtained results show the importance of the deactivation treatment (a) in stage (B). In fact, when no deactivation treatment is carried out, the titanium based catalyst remains active also in the polymerization stage (C), thus producing a considerable amount of undesirable polymer with a too high molecular weight. The final polymer has a very high MWD, as evidenced by the high value of the Mw/Mn ratio, but the average molecular weight Mw is too high and the polymer is thus unprocessable.

### COMPARATIVE EXAMPLE B

The procedure described in Examples 1-7 was repeated, with the exception that in stage (B), *rac*-1,2-ethylene-bis(4,7-dimethyl-1-indenyl)zirconium dichloride was used instead of ethylene-bis(2-indenyl)zirconium dichloride. *Rac*-1,2-ethylene-bis(4,7-dimethyl-1-indenyl)zirconium dichloride was prepared as described in the International patent application WO 95/35333. Due to the low catalytic activity of the used zirconocene in polymerization stage (C), MAO was used in association with TIOA as cocatalyst. The polymerization conditions and the characterization data of the polymers obtained in the single stages are reported in Tables 1 and 2; characterization data of the final polymer are reported in Table 3.

From the obtained results, it is evident that zirconocenes other than the ones used in the process according to the present invention do not provide sufficiently low Mw, therefore leading to insufficiently broad MWD values.

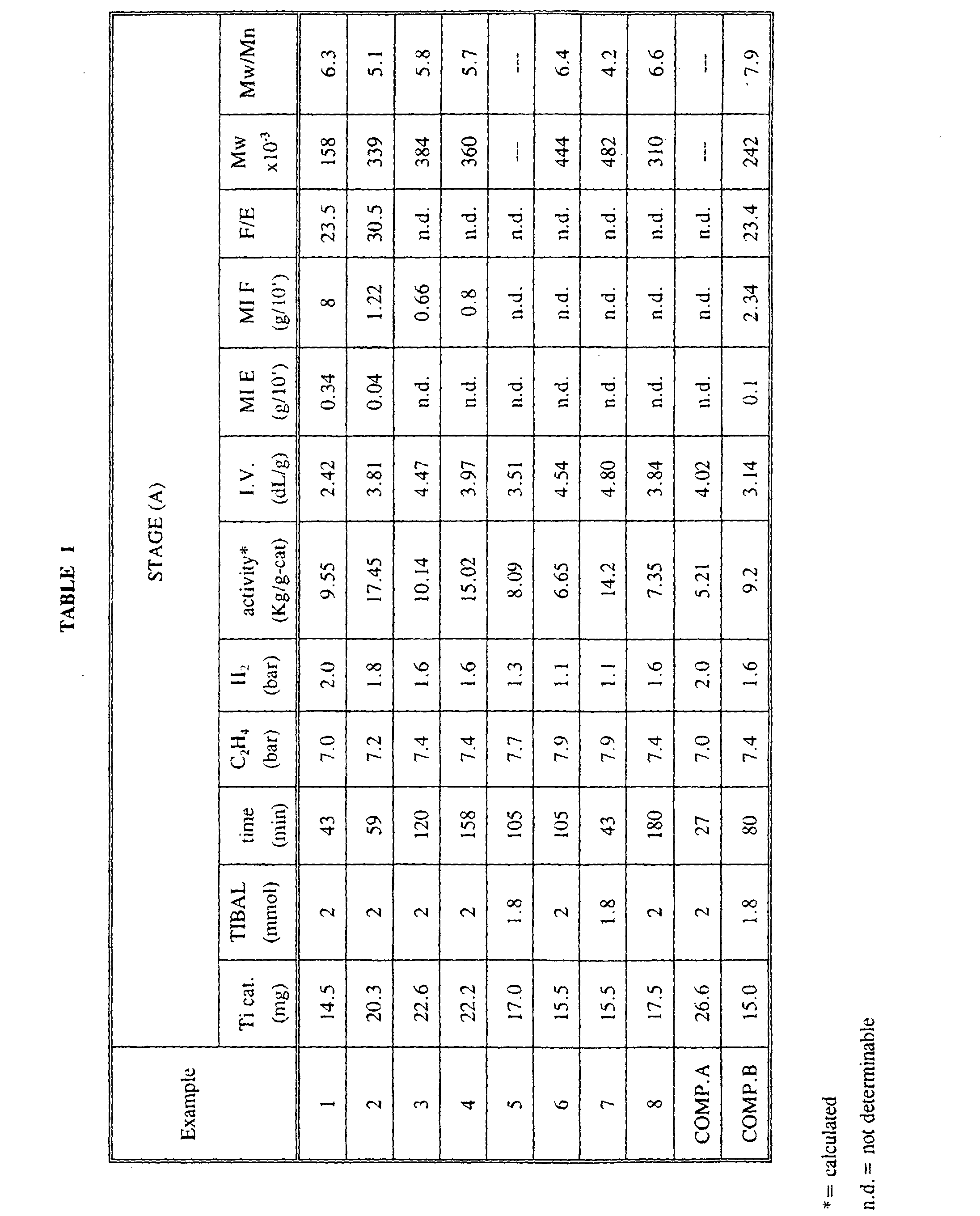

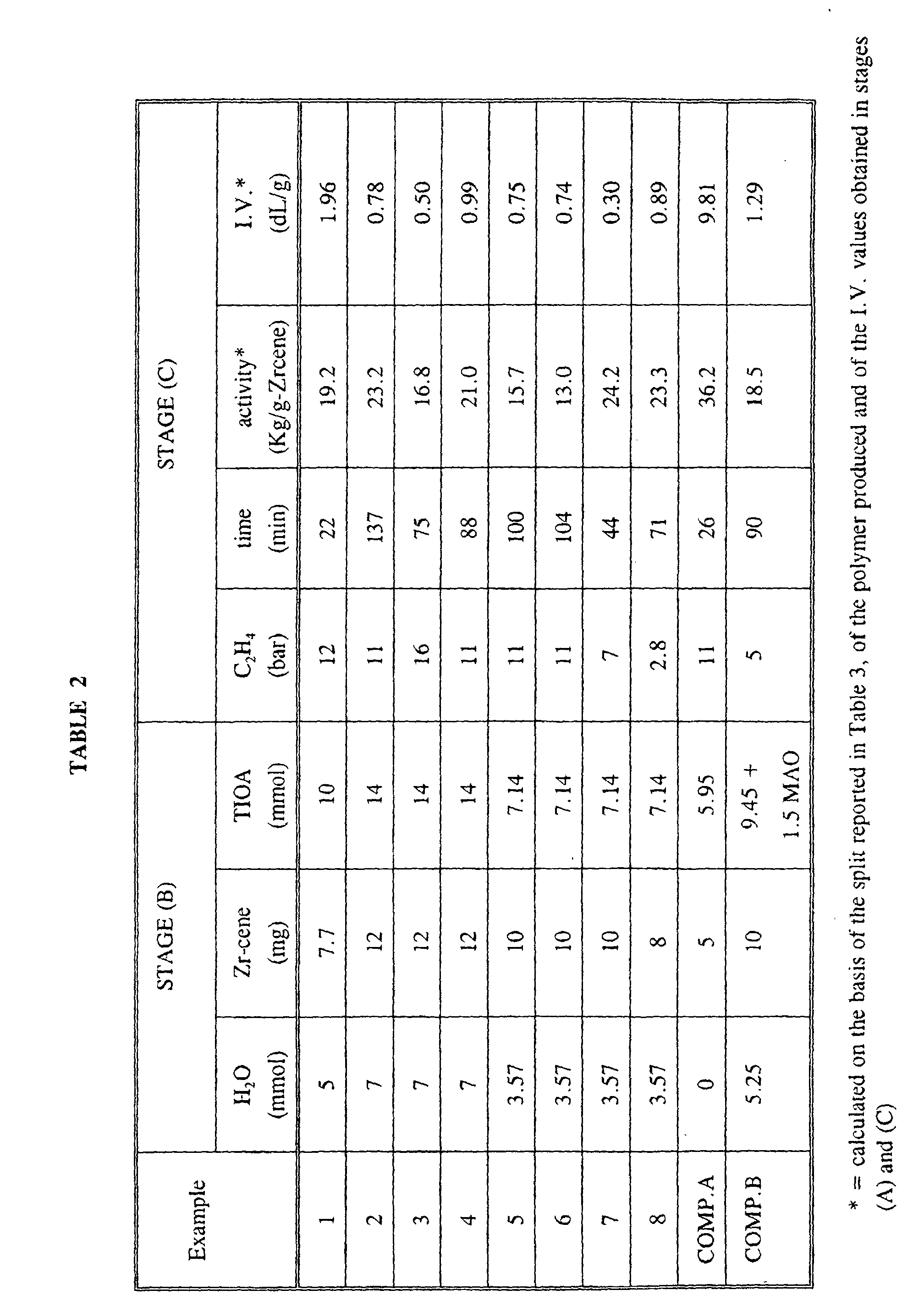

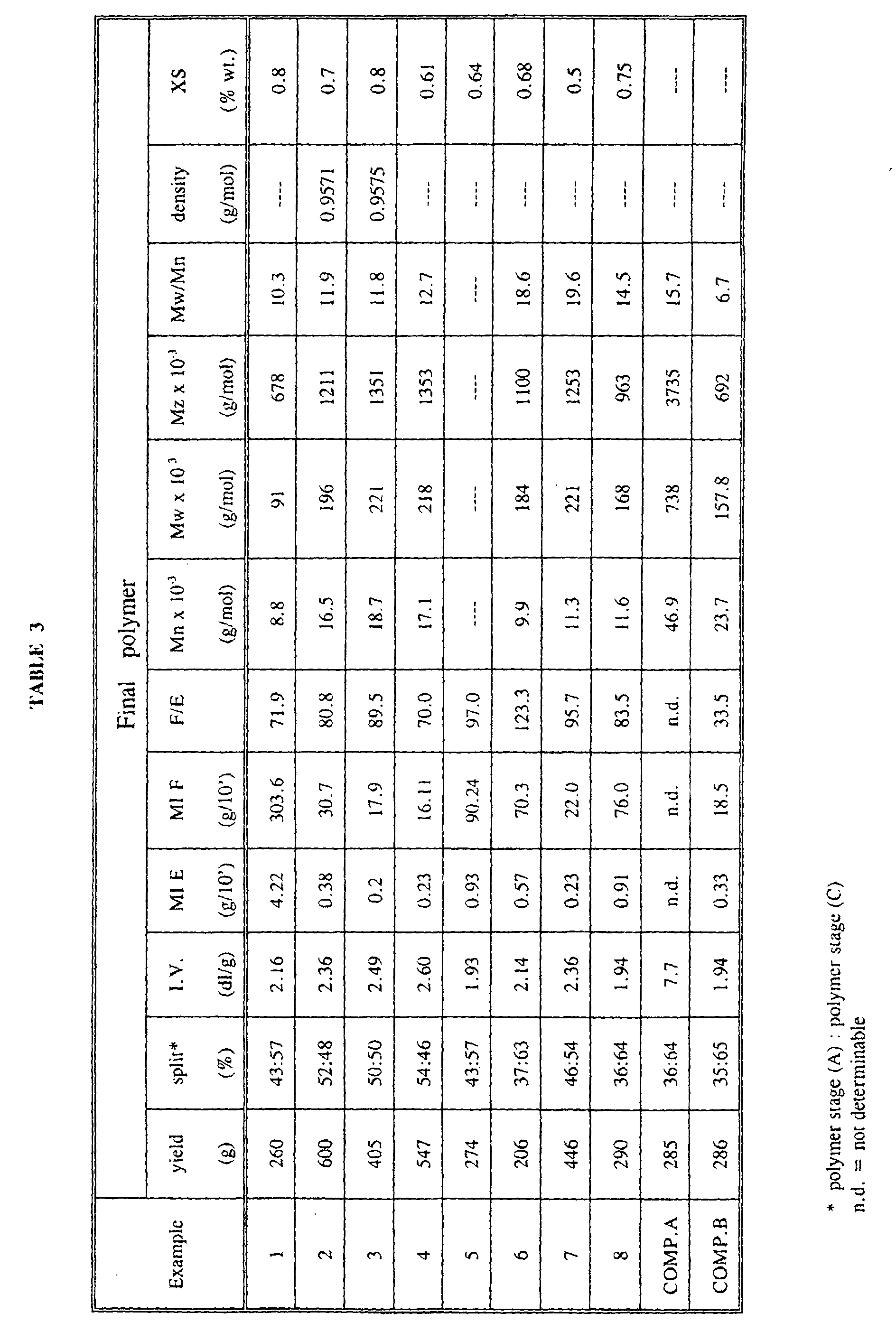

## Claims

1. A multi-stage process for the polymerization of ethylene, and optionally one or more α-olefins comprising from 3 to 10 carbon atoms, for producing a polymer having broad MWD, said process comprising the following stages:
(A) polymerizing ethylene, and optionally an α-olefin, in one or more reactors, in the presence of a catalyst comprising the reaction product between:
(i) a solid component comprising a compound of a transition metal M¹ selected from Ti and V, not containing M¹-π bonds, and a halide of Mg in active form, optionally comprising an electron-donor compound (internal donor);
(ii) an alkyl-Al compound and optionally an electron-donor compound (external donor);
(B) contacting the product obtained in stage (A), in any order whatever, with:
(a) a compound capable of deactivating the catalyst of stage (A);
(b) a zirconocene compound of formula (I): 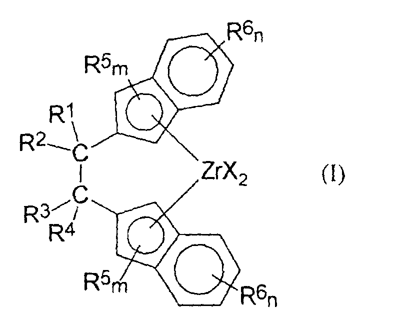 wherein
R¹, R², R³ and R⁴, the same or different from each other, are selected from the group consisting of hydrogen, linear or branched, saturated or unsaturated, C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more Si or Ge atoms, or wherein two substituents of R¹, R², R³ and R⁴ form a ring having from 4 to 8 carbon atoms;
R⁵ and R⁶, the same or different from each other, are selected from the group consisting of linear or branched, saturated or unsaturated C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more Si or Ge atoms, or wherein one pair of vicinal R⁶ substituents of the same indenyl group forms a ring having from 4 to 8 carbon atoms;
m is an integer ranging from 0 to 2; n is an integer ranging from 0 to 4;
the groups X, the same or different from each other, are hydrogen, halogen, -R, -OR, -SR, -NR₂ or -PR₂, wherein R is selected from the group consisting of linear or branched, saturated or unsaturated, C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more Si or Ge atoms; and
(c) optionally an activating cocatalyst;
(C) polymerizing ethylene, and optionally an α-olefin, in one or more reactors, in the presence of the polymer obtained from stage (B).

2. The multi-stage process according to claim 1, **characterized in that** the product obtained in stage (A) is an ethylene homo- or copolymer having a porosity, expressed as percentage of voids, higher than 5%.

3. The multi-stage process according to claim 2, **characterized in that** more than 40% of the porosity of said product obtained in stage (A) is due to pores with diameter higher than 10,000Å.

4. The multi-stage process according to claim 1, **characterized in that**, in stage (A)(i), said compound of a transition metal M¹ is selected from the group consisting of halides of Ti, halo-alcoholates of Ti, VCl₃, VCl₄, VOCl₃ and halo-alcoholates of V, and said halide of magnesium in active form is MgCl₂.

5. The multi-stage process according to claim 4, **characterized in that** said compound of a transition metal M¹ is selected from the group consisting of TiCl₄, TiCl₃ and halo-alcoholates of formula Ti(OR¹)ᵣXₛ, wherein R¹ is an C₁-C₁₂ hydrocarbon radical or a -COR¹ group, X is halogen and (r+s) is equal to the oxidation state of Ti.

6. The multi-stage process according to claim 1, **characterized in that**, in stage (A)(i), said solid component is in the form of spheroidal particles, with a mean diameter ranging from 10 to 150 µm.

7. The multi stage process according to claim 1, **characterized in that**, in stage (A)(i), said internal donor is an ether, a 1,3-diether, an ester of mono or polycarboxylic acids, an amine or a ketone.

8. The multi-stage process according to claim 1, **characterized in that**, in stage (A)(ii), said alkyl-Al compound is selected from the group consisting of triethyl-Al, triisobutyl-Al, tri-n-butyl-Al, tri-n-hexyl-Al, tri-n-octyl-Al, triisooctyl-Al, AlEt₂Cl, Al₂Et₃Cl₃ and mixtures thereof.

9. The multi-stage process according to claim 1, **characterized in that**, in stage (A)(ii), said external donor is a silicon compound of formula R^{II}R^{II}Si(OR^{II})₂, wherein the groups R^{II}, the same or different from each other, are C₁-C₁₈ alkyl, cycloalkyl or aryl radicals.

10. The multi-stage process according to claim 9, **characterized in that** said external donor is selected from the group consisting of methylcyclohexyldimethoxysilane, diphenyldimethoxysilane, methyl-t-butyldimethoxysilane and dicyclopentyldimethoxysilane.

11. The multi-stage process according to claim 1, **characterized in that**, in stage (B)(a), said compound capable of deactivating the catalyst of stage (A) is selected from the group consisting of CO, COS, CS₂, CO₂, O₂, acetylenic compounds, allenic compounds and compounds of formula R^{III}y₋₁XH, wherein R^{III} is hydrogen or a C₁-C₁₀ hydrocarbon group; X is O, N, or S; and y is the oxidation state of X.

12. The multi-stage process according to claim 11, **characterized in that** said compound of formula R^{III}y₋₁XH is selected from the group consisting of H₂O, NH₃ and H₂S.

13. The multi-stage process according to claim 1, **characterized in that**, in stage (B)(b), in the zirconocene compound of formula (I), R¹, R², R³ and R⁴ are selected from the group consisting of hydrogen, methyl, ethyl, propyl, phenyl and benzyl; R⁵ and R⁶ are selected from the group consisting of methyl, ethyl, propyl, phenyl and benzyl; and X is selected from the group consisting of Cl, Br and methyl.

14. The multi-stage process according to claim 13, **characterized in that** said zirconocene compound is selected from the group consisting of 1,2-ethylene-bis(2-indenyl)zirconium dichloride, 1,2-ethylene-bis(1,3-dimethyl-2-indenyl)zirconium dichloride, rac- and meso-1,2-ethylene-bis(1-methyl-2-indenyl)zirconium dichloride, rac- and meso-1,2-ethylene-bis(1-ethyl-2-indenyl)zirconium dichloride, rac- and meso-1,2-ethylene-bis(4-phenyl-2-indenyl)zirconium dichloride and rac- and meso-1,2-ethylene-bis(1-methyl-4-phenyl-2-indenyl)zirconium dichloride.

15. The multi-stage process according to claim 1, **characterized in that**, in stage (B)(c), said activating cocatalyst is an organometallic aluminum compound selected from the group consisting of tris(methyl)aluminum, tris(isobutyl)aluminum, tris(isooctyl)aluminum. bis(isobutyl)aluminum hydride, methyl-bis(isobutyl)aluminum, dimethyl(isobutyl)aluminum, tris(isohexyl)aluminum, tris(benzyl)aluminum, tris(tolyl)aluminum, tris(2,4,4-trimethylpentyl)aluminum, bis(2,4,4-trimethylpentyl) aluminum hydride, isobutyl-bis(2-phenyl-propyl)aluminum, diisobutyl-(2-phenylpropyl)aluminum, isobutyl-bis(2,4,4-trimethyl-pentyl)aluminum, diisobutyl-(2,4,4-trimethyl-pentyl)aluminum and mixtures thereof.

16. The multi-stage process according to claim 1, **characterized in that**, in stage (B)(c), said activating cocatalyst is the reaction product between water and one or more organometallic aluminum compounds as described in claim 15.

17. The multi-stage process according to claim 1, **characterized in that**, in stage (B)(c), said activating cocatalyst is one or more linear, branched or cyclic alumoxanes of formula: 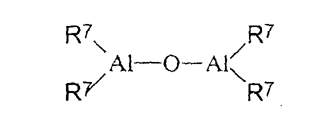 wherein the substituents R⁷, the same or different from each other, are linear or branched, saturated or unsaturated, C₂-C₂₀ alkyl, cycloalkyl, aryl, arylalkyl or alkylaryl radicals, or are -O-Al(R⁷)₂.

18. The multi-stage process according to claim 17, **characterized in that** said alumoxane is selected from the group consisting of methylalumoxane, tetra-isobutyl-alumoxane, tetra-2,4,4-trimethylpentylalumoxane, tetra-2-methyl-pentylalumoxane and mixtures thereof.

19. The multi-stage process according to claim 1, **characterized in that**, in stage (B), the product obtained in stage (A) is:
(a)brought into contact with aliphatic hydrocarbons containing, in solution, suspension or dispersion, quantities of said compound capable of deactivating the catalyst of stage (A), so that the molar ratio of said compound to M¹ is higher than 50: and,
(b)treated with a solutions containing a zirconocene compound, an Al-trialkyls, wherein the alkyl groups contain from 1 to 12 carbon atoms, and an alumoxane.

20. The multi-stage process according to claim 1, **characterized in that** stage (A) is carried out in liquid phase, said liquid phase being constituted of a hydrocarbon solvent or of one or more C₁-C₁₀ α-olefins, and **characterized in that** stage (C) is carried out in at least one gas-phase reactor with a fluidized bed or a mechanically-stirred bed.

21. The multi-stage process according to claim 1, **characterized in that** stages (A) and (C) are carried out in gas-phase reactors with a fluidized bed or a mechanically-stirred bed.

22. The multi-stage process according to claim 1, **characterized in that** stage (B) is carried out in a gas-phase loop reactor.

23. The multi-stage process according to claim 1, **characterized in that** the amount of polymer produced in stage (A) is between 10 and 90% wt. based on the total amount of polymer produced in stages (A) and (C).

24. Broad MWD polyethylene obtainable by the multi-stage process as described in anyone of claims 1-23, having the following characteristics:
1) intrinsic viscosity (I.V.) ranging from 0.5 to 6 dl/g;
2) molecular weight distribution Mw/Mn > 8; and
3) cold xylene solubility XS < 1.2 %wt.

## Patentansprüche

1. Mehrstufiges Verfahren zur Polymerisation von Ethylen und gegebenenfalls einem Olefin oder mehreren α-Olefinen, das/die 3 bis 10 Kohlenstoffatome umfaßt/umfassen zur Herstellung eines Polymeren mit breiter MWD, wobei das Verfahren die folgenden Stufen umfaßt:
(A) Polymerisieren von Ethylen und gegebenenfalls einem α-Olefin in einem Reaktor oder in mehreren Reaktoren in Gegenwart eines Katalysators, der das Reaktionsprodukt zwischen:
(i) einer Feststoffkomponente, die eine Verbindung eines Übergangsmetalis M¹, das aus Ti und V ausgewählt ist, die aber keine M¹-π-Bindungen enthält, und ein Mg-Halogenid in aktiver Form umfaßt, die gegebenenfalls eine Elektronendonator-Verbindung (interner Donator) umfaßt;
(ii) und einer Alkyl-Al-Verbindung und gegebenenfalls einer Elektronendonator-Verbindung (externer Donator) umfaßt;
(B) Inkontaktbringen des in Stufe (A) erhaltenen Produktes in beliebiger Reihenfolge mit:
(a) einer Verbindung, die zur Desaktivierung des Katalysator von Stufe (A) fähig ist;
(b) einer Zirconocen-Verbindung der Formel (I): 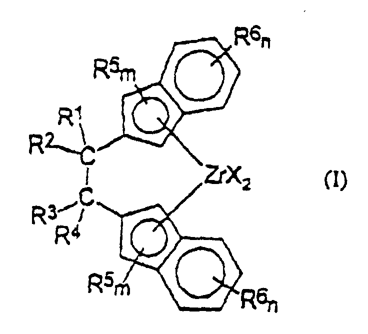 worin
R¹, R², R³ und R⁴, die gleich oder voneinander verschieden sind, aus der Gruppe, bestehend aus Wasserstoff, linearen oder verzweigten, gesättigten oder ungesättigten C₁-C₂₀-Alkyl-, C₃-C₂₀-Cycloalkyl-, C₆-C₂₀-Aryl-, C₇-C₂₀-Alkylaryl- und C₇-C₂₀-Arylalkyl-Gruppen, die gegebenenfalls ein oder mehrere Si- oder Ge-Atome enthalten, ausgewählt werden oder worin zwei Substituenten von R¹, R², R³ und R⁴ einen Ring mit 4 bis 8 Kohlenstoffatomen bilden;
R⁵ und R⁶, die gleich oder voneinander verschieden sind, aus der Gruppe, bestehend aus linearen oder verzweigten, gesättigten oder ungesättigten C₁-C₂₀-Alkyl-, C₃-C₂₀-Cycloalkyl-, C₆-C₂₀-Aryl-, C₇-C₂₀-Alkylaryl- und C₇-C₂₀-Arylalkyl-Gruppen, die gegebenenfalls ein oder mehrere Si- oder Ge-Atome enthalten, ausgewählt werden oder worin ein Paar benachbarter R⁶-Substituenten derselben Indenyl-Gruppe einen Ring mit 4 bis 8 Kohlenstoffatomen bildet;
m eine ganze Zahl im Bereich von 0 bis 2 ist; n eine ganze Zahl im Bereich von 0 bis 4 ist;
die Gruppen X, die gleich oder voneinander verschieden sind, Wasserstoff, Halogen, -R, -OR, -SR, -NR₂, oder -PR₂ sind, worin R aus der Gruppe, bestehend aus linearen oder verzweigten, gesättigten oder ungesättigten C₁-C₂₀-Alkyl-, C₃-C₂₀-Cycloalkyl-, C₆-C₂₀-Aryl-, C₇-C₂₀-Alkylaryl- und C₇-C₂₀-Arylalkyl-Gruppen, die gegebenenfalls ein oder mehrere Si- oder Ge-Atome enthalten, ausgewählt wird; und
(c) gegebenenfalls einem Aktivierungs-Cokatalysator;
(C) Polymerisieren von Ethylen und gegebenenfalls einem α-Olefin in einem oder mehreren Reaktoren in Gegenwart des in Stufe (B) erhaltenen Polymeren.

2. Mehrstufiges Verfahren nach Anspruch 1, **dadurch gekennzeichnet, daß** das in Stufe (A) erhaltene Produkt ein Ethylen-Homo- oder -Copolymer ist, das eine Porosität, ausgedrückt als Prozentgehalt an Poren, von höher als 5 % hat.

3. Mehrstufiges Verfahren nach Anspruch 2, **dadurch gekennzeichnet, daß** mehr als 40 % der Porosität des Produktes, das in Stufe (A) erhalten wird, durch Poren bedingt sind, die einen Durchmesser von größer als 10 000 Å haben.

4. Mehrstufiges Verfahren nach Anspruch 1, **dadurch gekennzeichnet, daß** in Stufe (A) (i) die Verbindung eines Übergangsmetalls M¹ aus der Gruppe, bestehend aus Ti-Halogeniden, Halogenalkoholaten von Ti, VCl₃, VCl₄, VOCl₃ und Halogenalkoholaten von V, ausgewählt wird und daß Magnesiumhalogenid in aktiver Form MgCl₂ ist.

5. Mehrstufiges Verfahren nach Anspruch 4, **dadurch gekennzeichnet, daß** die Verbindung eines Übergangsmetalls M¹ aus der Gruppe, bestehend aus TiCl₄, TiCl₃ und Halogenalkoholaten der Formel Ti(OR¹)ᵣXₛ, worin R¹ eine C₁-C₁₂-Kohlenwasserstoff-Gruppe oder eine -COR¹-Gruppe ist, X Halogen ist und (r+s) gleich dem Oxidationszustand von Ti ist, ausgewählt wird.

6. Mehrstufiges Verfahren nach Anspruch 1, **dadurch gekennzeichnet, daß** in der Stufe (A)(i) die Feststoffkomponente in Form sphärischer Partikel mit einem mittleren Durchmesser im Bereich von 10 bis 150 µm vorliegt.

7. Mehrstufiges Verfahren nach Anspruch 1, **dadurch gekennzeichnet, daß** in der Stufe (A) (i) der interne Donator ein Ether, ein 1,3-Diether, ein Ester von Mono- oder Polycarbonsäuren, ein Amin oder ein Keton ist.

8. Mehrstufiges Verfahren nach Anspruch 1, **dadurch gekennzeichnet, daß** in der Stufe (A) (ii) die Alkyl-Al-Verbindung aus der Gruppe, bestehend aus Triethyl-Al, Triisobutyl-Al, Tri-n-butyl-Al, Tri-n-hexyl-Al, Tri-n-octyl-Al, Triisooctyl-Al, AlEt₂Cl, Al₂Et₃Cl₃ und Gemischen davon, ausgewählt wird.

9. Mehrstufiges Verfahren nach Anspruch 1, **dadurch gekennzeichnet, daß** in der Stufe (A) (ii) der externe Donator eine Silicium-Verbindung der Formel R^{II}R^{II}Si(OR^{II})₂ ist, worin die Gruppen R^{II} gleich oder unterschiedlich sind und C₁-C₁₈-Alkyl-, Cycloalkyl- oder Aryl-Gruppen sind.

10. Mehrstufiges Verfahren nach Anspruch 9, **dadurch gekennzeichnet, daß** der externe Donator aus der Gruppe, bestehend aus Methylcyclohexyldimethoxysilan, Diphenyldimethoxysilan, Methyl-t-butyldimethoxysilan und Dicyclopentyldimethoxysilan, ausgewählt wird.

11. Mehrstufiges Verfahren nach Anspruch 1, **dadurch gekennzeichnet, daß** in der Stufe (B) (a) die Verbindung, die zur Desaktivierung des Katalysators der Stufe (A) fähig ist, aus der Gruppe, bestehend aus CO, COS, CS₂, CO₂, O₂, Acetylen-Verbindungen, Allen-Verbindungen und Verbindungen der Formel R^{III}y₋₁XH, worin R^{III} Wasserstoff oder eine C₁-C₁₀-Kohlenwasserstoff-Gruppe ist; X für O, N oder S steht und y der Oxidationszustand von X ist, ausgewählt wird.

12. Mehrstufiges Verfahren nach Anspruch 11, **dadurch gekennzeichnet, daß** die Verbindung der Formel R^{III}y₋₁XH aus der Gruppe, bestehend aus H₂O, NH₃ und H₂S ausgewählt wird.

13. Mehrstufiges Verfahren nach Anspruch 1, **dadurch gekennzeichnet, daß** in der Stufe (B)(b) bei der Zirkonocen-Verbindung der Formel (I), R¹, R², R³ und R⁴ aus der Gruppe, bestehend aus Wasserstoff, Methyl, Ethyl, Propyl, Phenyl und Benzyl, ausgewählt werden; R⁵ und R⁶ aus der Gruppe, bestehend aus Methyl, Ethyl, Propyl, Phenyl und Benzyl, ausgewählt werden und X aus der Gruppe, bestehend aus Cl, Br und Methyl, ausgewählt wird.

14. Mehrstufiges Verfahren nach Anspruch 13, **dadurch gekennzeichnet, daß** die Zirkonocen-Verbindung aus der Gruppe, bestehend aus 1,2-Ethylen-bis(2-indenyl)-zirkoniumchlorid, 1,2-Ethylen-bis(1,3-dimethyl-2-indenyl)zirkoniumdichlorid, rac- und meso-1,2-Ethylenbis(1-methyl-2-indenyl)zirkoniumdichlorid, rac- und meso-1,2-Ethylen-bis(1-ethyl-2-indenyl)zirkoniumchlorid, rac- und meso-1,2-Ethylen-bis(4-phenyl-2-indenyl)zirkoniumdichlorid und rac- und meso-1,2-Ethylen-bis(1-methyl-4-phenyl-2-indenyl)zirkoniumdichlorid, ausgewählt wird.

15. Mehrstufiges Verfahren nach Anspruch 1, **dadurch gekennzeichnet, daß** in der Stufe (B)(c) der Aktivierungs-Cokatalysator eine organometallische Aluminium-Verbindung, ausgewählt aus der Gruppe, bestehend aus Tris(methyl)aluminium, Tris(isobutyl)aluminium, Tris(isooctyl)aluminium, Bis(isobutyl)aluminiumhydrid, Methyl-bis(isobutyl)aluminium, Dimethyl(isobutyl)-aluminium, Tris(isohexyl)aluminium, Tris(benzyl)-aluminium, Tris(tolyl)aluminium, Tris(2,4,4-trimethylpentyl)aluminium, Bis(2,4,4-trimethylpentyl)aluminiumhydrid, Isobutyl-bis(2-phenylpropyl)aluminium, Diisobutyl-(2-phenylpropyl)aluminium, Isobutyl-bis(2,4,4-trimethylpentyl)aluminium, Diisobutyl-(2,4,4-trimethylpentyl)aluminium und Gemischen davon, ist.

16. Mehrstufiges Verfahren nach Anspruch 1, **dadurch gekennzeichnet, daß** in der Stufe (B)(c) der Aktivierungs-Cokatalysator das Reaktionsprodukt zwischen Wasser und einer organometallischen Aluminium-Verbindung oder mehreren organometallischen Aluminium-Verbindungen, wie sie in Anspruch 15 beschrieben sind, ist.

17. Mehrstufiges Verfahren nach Anspruch 1, **dadurch gekennzeichnet, daß** in der Stufe (B)(c) der Aktivierungs-Cokatalysator ein lineares, verzweigtes oder cyclisches Alumoxan oder mehrere lineare, verzweigte oder cyclische Alumoxane der Formel: 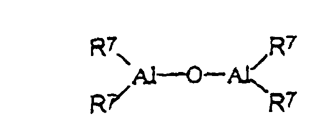 ist, worin die Substituenten R⁷, die gleich oder voneinander verschieden sind, lineare oder verzweigte, gesättigte oder ungesättigte C₂-C₂₀-Alkyl-, Cycloalkyl-, Aryl-, Arylaklyl- oder Alkylaryl-Gruppen sind oder -O-Al(R⁷)₂ sind.

18. Mehrstufiges Verfahren nach Anspruch 17, **dadurch gekennzeichnet, daß** das Alumoxan aus der Gruppe, bestehend aus Methylalumoxan, Tetra-isobutyl-alumoxan, Tetra-2,4,4-trimethylpentylalumoxan, Tetra-2-methylpentylalumoxan und Gemischen davon, ausgewählt wird.

19. Mehrstufiges Verfahren nach Anspruch 1, **dadurch gekennzeichnet, daß** in der Stufe (B) das in Stufe (A) erhaltene Produkt:
(a) mit aliphatischen Kohlenwasserstoffen, die in Lösung, Suspension oder Dispersion Mengen der Verbindung, die zur Desaktivierung des Katalysators von Stufe (A) fähig ist, derart enthalten, daß das Molverhältnis der Verbindung zu M¹ höher als 50 ist, in Kontakt gebracht wird; und
(b) mit Lösungen behandelt wird, die eine Zirkonocen-Verbindung, ein Al-Trialkyl, worin die Alkyl-Gruppen 1 bis 12 Kohlenstoffatome enthalten, und ein Alumoxan enthält.

20. Mehrstufiges Verfahren nach Anspruch 1, **dadurch gekennzeichnet, daß** die Stufe (A) in flüssiger Phase durchgeführt wird, wobei die flüssige Phase aus einem Kohlenwasserstoff-Lösungsmittel oder einem oder mehreren C₁₋₁₀-α-Olefinen besteht, und **dadurch gekennzeichnet, daß** die Stufe (C) in mindestens einem Gasphasenreaktor mit einem Wirbelbett oder einem mechanisch gerührten Bett durchgeführt wird.

21. Mehrstufiges Verfahren nach Anspruch 1, **dadurch gekennzeichnet, daß** die Stufen (A) und (C) in Gasphasenreaktoren mit einem Wirbelbett oder einem mechanisch gerührten Bett durchgeführt werden.

22. Mehrstufiges Verfahren nach Anspruch 1, **dadurch gekennzeichnet, daß** die Stufe (B) in einem Gasphasen-Schleifenreaktor durchgeführt wird.

23. Mehrstufiges Verfahren nach Anspruch 1, **dadurch gekennzeichnet, daß** die in Stufe (A) produzierte Menge an Polymer zwischen 10 und 90 Gew.-%, bezogen auf die Gesamtmenge an Polymer, das in den Stufen (A) und (C) produziert wird, liegt.

24. Polyethylen mit breiter MWD, erhältlich nach dem mehrstufigen Verfahren gemäß einem der Ansprüche 1 bis 23, das die folgenden Charakteristika hat:
1) intrinsische Viskosität (I.V.) im Bereich von 0,5 bis 6 dl/g;
2) Molekulargewichtsverteilung Mw/Mn > 8 und
3) Löslichkeit in kaltem Xylol XS <1,2 Gew.-%.

## Revendications

1. Un procédé multi-étapes de polymérisation d'éthylène, et éventuellement de une ou plusieurs α-oléfines comprenant 3 à 10 atomes de carbone pour produire un polymère présentant un large spectre MWD, ce procédé comprenant les étapes suivantes:
(A) polymérisation d'éthylène, et éventuellement d'une α-oléfine dans un ou plusieurs réacteurs en présence d'un catalyseur comprenant le produit de réaction entre:
(i) un composant solide comprenant un composé d'un métal de transition M¹ choisi parmi Ti et V, ne contenant pas de liaisons M¹-π, et un halogénure de Mg sous forme active, et comprenant éventuellement un composé électron-donneur (donneur interne);
(ii) un composé alkyl-aluminium, et éventuellement un composé électron-donneur (donneur externe);
(B) le contact du produit obtenu à l'étape (A), dans n'importe quel ordre, avec:
(a) un composé susceptible de désactiver le catalyseur de l'étape (A);
(b) un composé zirconocène de formule (I): 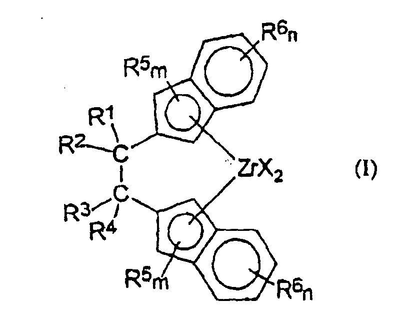 dans laquelle
R¹, R², R³ et R⁴, identiques ou différents les uns des autres, sont choisis dans le groupe comprenant l'atome d'hydrogène, des radicaux linéaires ou ramifiés, saturés ou insaturés, alkyle en C₁-C₂₀, cycloalkyle en C₃-C₂₀, aryle en C₆-C₂₀, alkylaryle en C₇-C₂₀ et arylalkyle en C₇-C₂₀, contenant éventuellement un ou plusieurs atomes de Si ou de Ge, ou dans laquelle deux des substituants R¹, R², R³ et R⁴ forment un cycle présentant 4 à 8 atomes de carbone;
R⁵ et R⁶, identiques ou différents les uns des autres sont choisis dans le groupe comprenant les radicaux linéaires ou ramifiés, saturés ou insaturés, alkyle en C₁-C₂₀, cycloalkyle en C₃-C₂₀, aryle en C₆-C₂₀, alkylaryle en C₇-C₂₀ et arylalkyle en C₇-C₂₀, contenant éventuellement un ou plusieurs atomes de Si ou de Ge, ou dans laquelle une paire de deux substituants R⁶ voisins du même groupe indényle forment un cycle présentant de 4 à 8 atomes de carbone;
m est un nombre entier de 0 à 2; n est un nombre entier de 0 à 4;
les groupes X, identiques ou différents les uns des autres, constituant un atome d'hydrogène, un halogène ou un radical R, -OR, -SR, -NR₂ ou -PR₂, dans lequel R est choisi dans le groupe comprenant les radicaux linéaires ou ramifiés, saturés ou insaturés, alkyle en C₁-C₂₀, cycloalkyle en C₃-C₂₀, aryle en C₆-C₂₀, alkylaryle en C₇-C₂₀ et arylalkyle en C₇-C₂₀, contenant éventuellement un ou plusieurs atomes de Si ou de Ge; et
(c) éventuellement un cocatalyseur d'activation.
(C) La polymérisation de l'éthylène, éventuellement d'une α-oléfine dans un ou plusieurs réacteurs, en présence du polymère obtenu dans l'étape (B).

2. Le procédé multi-étapes selon la revendication 1, **caractérisé en ce que** le produit obtenu à l'étape (A) est un homo- ou copolymère d'éthylène présentant une porosité, exprimée en pourcentage de vides, supérieure à 5 %.

3. Le procédé multi-étapes selon la revendication 2, **caractérisé en ce que** plus de 40 % de la porosité dudit produit obtenu à l'étape (A) est dû à des pores d'un diamètre supérieur à 10 000 Å.

4. Le procédé multi-étapes selon la revendication 1, **caractérisé en ce que** dans l'étape (A)(i), ledit composé de métal de transition M¹ étant choisi dans le groupe comprenant les halogénures de Ti, les halo-alcoolates de Ti, VCl₃, VCl₂, VOCl₃ et les halo-alcoolates de V, et ledit halogénure de magnésium sous forme active est MgCl₂.

5. Le procédé multi-étapes selon la revendication 4, **caractérisé en ce que** ledit composé de métal de transition M¹ est choisi dans le groupe comprenant TiCl₄, TiCl₃ et les halo-alcoolates de formule Ti(OR¹)ᵣXₛ, dans lequel R¹ est un radical hydrocarbonés en C₁-C₁₂ ou un groupe -COR¹, X est un atome d'halogène et (r+s) est égal à l'état d'oxydation de Ti.

6. Le procédé multi-étapes selon la revendication 1, **caractérisé en ce que**, dans l'étape (A) (i), ledit composant solide est sous forme de particules sphéroïdes, dont le diamètre moyen est compris entre 10 et 150 µm.

7. Le procédé multi-étapes selon la revendication 1, **caractérisé en ce que**, dans l'étape (A) (i), ledit donneur interne est un éther, un 1,3-diéther, un ester d'acides mono- ou polycarboxyliques, une amine ou une cétone.

8. Le procédé multi-étapes selon la revendication 1, **caractérisé en ce que** dans l'étape (A) (ii), ledit composé alkyl-aluminium est choisi dans le groupe consistant en triéthyl-aluminium, triisobutyl-aluminium, tri-n-butyl-aluminium, tri-n-hexyl-aluminium, tri-n-octyl-aluminium, triisooctyl-aluminium, AlEt₂Cl, Al₂Et₃Cl₃ ainsi que leurs mélanges.

9. Le procédé multi-étapes selon la revendication 1, **caractérisé en ce que** dans l'étape (A) (ii) ledit donneur externe est un composé du silicium de formule R"R"Si(OR")₂, dans laquelle les groupes R", identiques ou différents les uns des autres sont des radicaux alkyle, cycloalkyle, aryle en C₁-C₁₈.

10. Le procédé multi-étapes selon la revendication 9, **caractérisé en ce que** ledit donneur externe est choisi dans le groupe comprenant le méthylcyclohexyldiméthoxysilane, diphényldiméthoxysilane, méthyl-t-butyldiméthoxysilane et dicyclopentyldiméthoxysilane.

11. Le procédé multi-étapes selon la revendication 1, **caractérisé en ce que**, dans l'étape (B) (a), ledit composé susceptible de désactiver le catalyseur de l'étape (A) est choisi dans le groupe comprenant CO, COS, CS₂, CO₂, O₂, des composés acétyléniques, des composés alléniques et des composés de formule R'''_{y-1}XH, où R''' est un atome hydrogène ou un radical hydrocarboné en C₁-C₁₀; X est O, N ou S; et y est l'état d'oxydation de X.

12. Le procédé multi-étapes selon la revendication 11, **caractérisé en ce que** ledit composé de formule R'''_{y-1}XH est choisi dans le groupe comprenant H₂O, NH₃ et H₂S.

13. Le procédé multi-étapes selon la revendication 1, **caractérisé en ce que**, dans l'étape (B) (b) dans le composé zirconocène de formule (I), R¹, R², R³ et R⁴ sont choisis dans le groupe comprenant un atome d'hydrogène et les radicaux méthyle, éthyle, propyle, phényle et benzyle; R⁵ et R⁶ sont choisis comprenant les radicaux méthyle, éthyle, propyle, phényle et benzyle; et X est choisi dans le groupe comprenant les atomes de chlore, de brome et le radical méthyle.

14. Le procédé multi-étapes selon la revendication 13, **caractérisé en ce que** ledit composé zirconocène est choisi dans le groupe comprenant les dichlorure de 1,2-éthylène-bis(2-indényl)zirconium, dichlorure de 1,2-éthylène-bis(1,3-diméthyl-2-indényl)zirconium, dichlorure de rac- et méso-1,2-éthylène-bis(1-méthyl-2-indényl)zirconium, dichlorure rac- et méso-1,2-éthylène-bis(1-éthyl-2-indényl) zirconium, dichlorure rac- et méso-1,2-éthylène-bis(4-phényl-2-indényl) zirconium, dichlorure de rac- et méso-1,2-éthylène-bis(1-méthyl-4-phényl-2-indényl)zirconium.

15. Le procédé multi-étapes selon la revendication 1, **caractérisé en ce que**, dans l'étape (B) (c) ledit cocatalyseur d'activation est un composé d'aluminium organométallique choisi dans le groupe comprenant tris(méthyl)aluminium, tris(isobutyl)aluminium, tris(isooctyl)aluminium, hydrure de bis(isobutyl)aluminium, méthyl-bis(isobutyl)aluminium, diméthyl(isobutyl)aluminium, tris(isohexyl) tris(benzyl)aluminium, tris(tolyl)aluminium, tris(2,4,4-triméthylpentyl) aluminium, hydrure de bis(2,4,4-triméthylpentyl)aluminium, isobutyl-bis(2-phénylpropyl)aluminium, diisobutyl-(2-phényl-propyl)aluminium, isobutyl-bis(2,4,4-triméthyl-pentyl)aluminium, diisobutyl-(2,4,4-triméthyl-pentyl) aluminium ainsi que leurs mélanges.

16. Le procédé multi-étapes selon la revendication 1, **caractérisé en ce que**, dans l'étape (B) (c) ledit cocatalyseur d'activation est le produit de réaction entre l'eau et un ou plusieurs composés aluminium organométalliques tel que décrit dans la revendication 15.

17. Le procédé multi-étapes selon la revendication 1, **caractérisé en ce que**, dans l'étape (B) (c) ledit cocatalyseur d'activation est un ou plusieurs alumoxanes linéaires, ramifiés ou cycliques de formule: 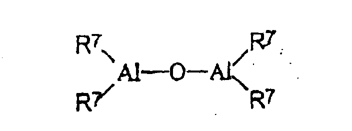 dans laquelle les substituants R⁷, identiques ou différents les uns des autres sont des radicaux linéaires ou ramifiés, saturés ou insaturés, alkyle en C₂-C₂₀, cycloalkyle, aryle, arylalkyle ou alkylaryle ou consistent en ―O-Al(R⁷)₂.

18. Le procédé multi-étapes selon la revendication 17, **caractérisé en ce que** ledit alumoxane est choisi dans le groupe comprenant méthylalumoxane, tétraisobutyl-alumoxane, tétra-2,4,4-triméthylpentylalumoxane, tétra-2-méthyl-pentylalumoxane et leurs mélanges.

19. Le procédé multi-étapes selon la revendication 1, **caractérisé en ce que**, dans l'étape (B), le produit obtenu à l'étape (A) est:
(a) amené en contact avec les hydrocarbures aliphatiques contenant, en solution, suspension ou dispersion des quantités dudit composé capable de désactiver le catalyseur de l'étape (A), de sorte que le rapport molaire dudit composé par rapport à M¹ soit supérieur à 50; et
(b) traité par des solutions contenant un composé zirconocène, un aluminium trialkyle dans lequel le groupe alkyle contient de 1 à 12 atomes de carbone et un alumoxane.

20. Le procédé mufti-étapes selon la revendication 1, **caractérisé en ce que** l'étape (A) est mise en oeuvre en phase liquide, ladite phase liquide étant constituée d'un solvant hydrocarboné ou de une ou plusieurs α-oléfines en C₁-C₁₀, et ce procédé étant **caractérisé en ce que** l'étape (C) est mise en oeuvre en au moins un réacteur en phase gazeuse contenant un lit fluidisé ou un lit agité mécaniquement.

21. Le procédé multi-étapes selon la revendication 1, **caractérisé en ce que** les étapes (A) et (C) sont mises en oeuvre dans des réacteurs en phase gazeuse en présence d'un lit fluidisé ou lit sous agitation mécanique.

22. Le procédé multi-étapes selon la revendication 1, **caractérisé en ce que** l'étape (B) est mise en oeuvre dans un réacteur en boucle en phase gazeuse.

23. Le procédé multi-étapes selon la revendication 1, **caractérisé en ce que** la quantité de polymère produite dans l'étape (A) est comprise entre 10 et 90 % en poids, exprimé par rapport au poids total de polymère produit dans les étapes (A) et (C).

24. Polyéthylène de large spectre MWD obtenu par un procédé multi-étapes tel que décrit dans l'une quelconque des revendications 1 à 23, présentant les caractéristiques suivantes:
viscosité intrinsèque (I.V.) compris entre 0,5 et 6 dl/g;
répartition de poids moléculaire Mw/Mn > 8; et
solubilité de xylène à froid XS < 1,2 % en poids.
